(19)

Europäisches
Patentamt

European
Patent Office

Office européen
des brevets

(11) **EP 3 447 836 B1**

(12) **EUROPEAN PATENT SPECIFICATION**

(45) Date of publication and mention
of the grant of the patent:
**23.12.2020 Bulletin 2020/52**

(51) Int Cl.:
***H01M 8/18*** *(2006.01)*     ***H01M 4/90*** *(2006.01)*

(21) Application number: **18190508.4**

(22) Date of filing: **23.08.2018**

(54) **ELECTRODE SYSTEM WITH POLYMER ELECTRODE**

ELEKTRODENSYSTEM MIT POLYMERELEKTRODE

SYSTÈME D'ÉLECTRODE À ÉLECTRODE POLYMÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2017 EP 17187975**

(43) Date of publication of application:
**27.02.2019 Bulletin 2019/09**

(73) Proprietor: **RISE Research Institutes of Sweden
AB**
**501 15 Borås (SE)**

(72) Inventors:
• **CRISPIN, Xavier**
**610 20 KIMSTAD (SE)**
• **CHE, Canyan**
**602 24 NORRKÖPING (SE)**
• **VAGIN, Mikhail**
**583 33 LINKÖPING (SE)**
• **JONSSON, Magnus**
**602 18 NORRKÖPING (SE)**

(74) Representative: **AWA Sweden AB**
**P.O. Box 11394**
**404 28 Göteborg (SE)**

(56) References cited:
**EP-A2- 0 987 775**     **WO-A1-2016/205407**
**CN-A- 101 976 727**     **US-A1- 2008 290 324**
**US-A1- 2010 252 782**

• **WEN YANG PING, YAO YUAN YUAN, ZHANG
LONG, XU JING KUN, HE HAO HUA: "Simple
Preparation of
Poly(3,4-ethylenedioxythiophene):
Poly(styrenesulfonate) Modified Electrode for
Application in Sensing and Biosensing Devices",
ADVANCED MATERIALS RESEARCH, vol.
446-467, 1 February 2012 (2012-02-01) , pages
17-22, XP009509900, ISSN: 1662-8985, DOI:
10.4028/www.scientific.net/AMR.466-467.17
ISBN: 978-3-03785-368-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The invention relates to electrode systems comprising an electrode and a molecule susceptible to electrochemical conversion.

**Background**

The interest in alternative energy sources is growing in the world today, as the carbon footprint associated with traditional, fossil energy sources such as coal, oil and gas is vast. The enormous amounts of fossil fuels consumed daily is the driving factor for the climate change we are experiencing today. There is therefore a need in the energy sector today to switch to more sustainable sources of energy.

Meanwhile, the pulp and paper industry today produces approximately 170 million tonnes/year of the waste product black liquor. Black liquor comprises approximately half of the organic material originally present in the wood. Black liquor is rich in lignin residues obtained after the sulfate (kraft) process. Several attempts have been made to depolymerize the lignin obtained from the black liquor, yielding a plethora of interesting aromatic molecules. For example, benzenediols can be extracted with an efficiency close to 7 percent.

In energy applications, benzenediols have been used in both combustion engines and in electrochemical energy devices such as fuel cells, typically fuel cells comprising platinum electrodes.

WO2016/205407 A1 discloses supercapacitors and batteries having cathodes comprising a capacitive polymer and a conductive polymer.

However, such electrochemical energy devices generally use expensive electrodes and fuels, or suffer from problems such as low current and high overpotentials. Therefore, there exists a need in technology today for improved electrode systems based on cheaper electrodes, cheaper fuels, that require smaller overpotentials and/or that can provide higher currents.

**Summary**

It is an object of the invention to provide improved electrode systems that alleviates or overcomes the above stated drawbacks and/or meets one or more of the above state needs. It is a further object to provide electrode system making use of renewable resources.

It is a further object of the invention to provide improved electrode systems for electrochemical conversion of a molecule susceptible to electrochemical conversion.

Yet another object of the present invention is to provide improved flow batteries exhibiting high reversibility and low dependence on non-renewable resources.

A still further object of the invention is to provide a reversible process for electrochemical conversion of a molecule susceptible to electrochemical conversion.

This and other objects are addressed by a novel electrode system combining a polymer electrode and a molecule susceptible to electrochemical conversion.

According to aspects illustrated herein there is provided an electrode system comprising a polymer electrode having an electron conductive phase and a proton conductive phase; and a molecule susceptible to electrochemical conversion, as defined in claim 1.

In many applications, electrode systems providing reversibility of the electrochemical conversions they facilitate is highly desired, for example, in applications relating to energy conversion. The targeted application of the present invention is for the electrode system to be used in a fuel cell or a flow battery. In such applications, high electrochemical reversibility is desired since it allows for re-chargeability of the fuel cell or flow battery. Rechargeable fuel cells are also generally denoted as regenerative fuel cells. Flow batteries constitute a sub-group of regenerative fuel cells.

The use of polymer electrodes in electrode systems has been found to be advantageous in that such electrodes are based on abundant chemical elements, mainly carbon. Polymer electrodes furthermore provide the advantage that such electrodes may be processed from a solution. Polymer electrodes can therefore be provided by coating the polymer onto a substrate. The substrate may have a relatively large area. Compared to metal electrodes, polymer electrodes provide yet another advantage in that insulating oxide layers do not form on polymer electrodes. Metal electrodes typically suffer from the formation of a passivating oxide layer at their surface.

Polymer electrodes are defined as electrodes comprising at least one polymer. In the present disclosure, the polymer electrodes disclosed herein generally comprises a proton conducting phase and an electron conducting phase. In preferred embodiments, this means that the polymer electrode comprises a polymer capable of conducting both protons and electrons or a mixture of polymers wherein at least one polymer is capable of conducting protons and at least one polymer is capable of conducting electrons.

Electrical conductivity in polymer electrodes is the result of several molecular processes. Polymer conductivity typically occurs in conjugated polymer materials, where the conducting polymers have a backbone of contiguous $sp^2$ hybridized carbon centers. In such materials, one valence electron on each carbon center resides in a $p_z$-orbital orthogonal to the other three sigma-bonds. The $p_z$-orbitals in the material combine to a molecular wide delocalized set of orbitals. The electrons in the delocalized orbitals have a high mobility when some of these electrons are removed by oxidation or added by reduction from/to the delocalized set of orbitals. The conjugated p-orbitals form a one-dimensional electronic band, and the electrons become mobile when the band is partially emptied (by oxidation) or when electrons are added an otherwise unfilled band (by reduction). Such addition or removal of electrons is generally denoted as doping.

The inventors have found that a decrease in overpotential, yielding higher currents and higher reversibility, particularly in electrochemical conversions involving the transfer of two protons and two electrons, can be achieved by providing an electrode comprising an electron conducting material and a proton conducting material in the vicinity of the molecule susceptible to electrochemical conversion. In an example, wherein the molecule susceptible to electrochemical conversion is a benzenediol, and the electrochemical conversion is the redox conversion of the benzenediol, it is believed that the reversibility of such a reaction requires that two protons per benzenediol molecule arrive at the vicinity of an electron transfer site between the electrode and the benzenediol. According to embodiments of the present invention, two protons per molecule may be provided by the proton conducting phase when the molecule susceptible to electrochemical conversion is in the vicinity of the proton conducting phase.

The reversibility of an electrochemical conversion may be determined qualitatively by cyclic voltammetry (CV). Cyclic voltammetry is a type of potentiodynamic electrochemical measurement. In a cyclic voltammetry experiment, the working electrode potential is ramped linearly versus time. Unlike linear sweep voltammetry, after the set potential is reached in a CV experiment, the working electrode's potential is ramped in the opposite direction to return to the initial potential. These cycles of ramps in potential may be repeated as many times as needed. The current at the working electrode is plotted versus the applied voltage (that is, the working electrode's potential) to give the cyclic voltammogram trace. Cyclic voltammetry is generally used to study the electrochemical properties of an analyte in solution. The reversibility of an electrochemical conversion is measured as the ratio between the anodic and cathodic peak currents ($i_{pa}/i_{pc}$). A $i_{pa}/i_{pc}$-ratio close to 1 indicates that the electrochemical conversion is reversible. Electrode systems capable of reversible electrochemical conversions are particularly useful in energy conversion applications, such as fuel cells and flow batteries.

In the present disclosure, the term electrode system denotes a system comprising at least one electrode and a least one molecule susceptible to electrochemical conversion. The electrochemical system may further comprise a second electrode and/or an electrolyte. The electrode system according to the present invention is suitable for use in for example energy conversion applications, such as fuel cells and/or flow batteries.

An electron conducting phase is in the present disclosure defined as a phase or moiety capable of conducting electrons between the electron conducting phase and the molecule susceptible to electrochemical conversion. The electron conducting phase may be capable of donating electrons to the molecule susceptible to electrochemical conversion or accepting electrons from the molecule susceptible to electrochemical conversion. The electron conducting phase may be capable of donating two electrons per molecule susceptible to electrochemical conversion and to accept two electrons per molecule from the molecule susceptible to electrochemical conversion.

The proton conducting phase may be defined in a way akin to the electrode conducting phase, but with the difference that the proton conducting phase is capable of conducting protons between the proton conducting phase and the molecule susceptible to electrochemical conversion.

A molecule susceptible to electrochemical conversion is defined as a molecule which can be converted in an electrochemical conversion, preferably an electrochemical reaction involving transfer of two electrons and two protons per molecule. The molecule susceptible to electrochemical conversion may typically be suitable as fuel for an electrochemical energy device such as in a fuel cell or a flow battery. The molecule susceptible to electrochemical conversion may be an aromatic molecule. The molecule susceptible to electrochemical conversion may be obtainable from lignin, preferably lignin obtained from so called black liquor. Lignin obtained from black liquor may be depolymerized into a plethora of molecules. Several of such molecules may be susceptible to electrochemical conversion. The electrochemical conversion may be a redox-reaction, such as the redox conversion of hydroquinone to benzoquinone and/or the redox conversion of benzoquinone to hydroquinone.

Lignin is a class of complex organic polymers that form structural materials in the support tissue of vascular plants and some algae. Lignin, is a collective name of a series of aromatic polymers coming from the polymerization of 4-hydroxycinnamyl alcohol (H), coniferyl alcohol (G), and sinapyl alcohol (S), interlinked by ether and carbon-carbon bonds. Lignin may be depolymerized into several aromatic compounds by methods known to a person skilled in the art. Typical aromatic molecules that can be obtained by the depolymerization of lignin includes 2-methulcyclopentenone, 3-methylcyclopentenone, phenol, 2,3-dimethylcyclopentenone, guaiacol, catechol, 3-methoxycatechol, 4-ethylguaiacol, 4-methylcatechol, syringoll, hydroquinone, DCPIP, compounds containing ortho- or para-benzoquinone moieties such as dopamine, adrenaline, norepinephrine, L-DOPA, compounds containing ortho- or para-naphthoquinone moieties such as vitamins K, atovaquone, buparvaquone, naphthazarin, alkannin, plumbagin, spinochrome D, juglone, hennotannic acid, lapachol, hexahydroxynaphthoquinone, compounds containing anthraquinone moieties such as anthraquinone dyes, 2-anthraquinonesulfonate, parietin. Such aromatic molecules are generally susceptible to electrochemical conversion.

One common source of lignin is black liquor. Black liquor is a waste product from the paper and pulp industry, more particularly from the kraft process wherein pulp wood is digested into paper pulp by removing lignin, hemicellulose and other extractives from the wood to free the cellulose fibers. Black liquor generally comprises about 35-45 percent lignin.

According to embodiments of the present invention, the molecule susceptible to electrochemical conversion may be a ortho- or para-aromatic diol or quinone, such as a benzene diol. Such molecules may be obtained from the depolymerisation of lignin. Aromatic diols comprise at least one aromatic functional group and two hydroxide groups. In a preferred embodiment, the molecule susceptible to electrochemical conversion is a benzene diol, preferably the ortho-isomer, commonly known as catechol, or the paraisomer, commonly known as hydroquinone. Benzenediols, for example, are energy-rich molecules that can store two electrons per aromatic ring.

In some examples, the molecule susceptible to electrochemical conversion is selected from the group consisting of catechol, hydroquinone, DCPIP, compounds containing ortho- or para-benzoquinone moieties such as dopamine, adrenaline, norepinephrine, L-DOPA, compounds containing ortho- or para-naphthoquinone moieties such as vitamins K, atovaquone, buparvaquone, naphthazarin, alkannin, plumbagin, spinochrome D, juglone, hennotannic acid, lapachol, hexahydroxynaphthoquinone, compounds containing anthraquinone moieties such as anthraquinone dyes, 2-anthraquinonesulfonate, parietin, or a combination thereof.

In some embodiments, the electron conducting phase comprises a conducting polymer, preferably a p-type conducting polymer, more preferably doped poly(3,4-ethylenedioxythiophene) (p-type PEDOT). A p-type conducting polymer is generally defined as a conducting polymer that has been doped oxidatively. Doped poly(3,4-ethylenedioxythiophene) (p-type PEDOT).is a p-type conducting polymer based on the 3,4-ethylenedioxythiophene (EDOT) monomer. The p-type PEDOT of the present invention may be synthesized according to methods known to the skilled person in the art. In at least one of its oxidation states P-type PEDOT has a high electrical conductivity and is therefore suited to act as an electron conduction phase. P-type PEDOT provides several additional advantages such as high stability over different charge and discharge cycles, and high processability. P-type PEDOT can be electrogenerated directly on several support materials.

In embodiments of the present invention the proton conducting phase comprises an anion, such as a polyanion, preferably polystyrene sulfonate (PSS). Preferably, the proton conducting phase is capable of acting as a counter-ion balancing the positive charge of the electron conducting phase. Polyanions are a type of polyelectrolytes, i.e. polymers having a repeating unit comprising a negatively charged group. One group of polyanions of particular interest are polyanionic acids. Polyanionic acids generally have a high proton conductivity and are therefore suitable to act as the proton conducting phase of the present invention.

Polystyrene sulfonate (PSS) is a polyanionic acid commonly used as a counter-ion to PEDOT. Thus, in some preferred embodiments the proton conducting phase comprises PSS. The proton conducting phase may also comprise tosylate (tos) or chloride ions.

In some embodiments, the polymer electrode comprises PEDOT:PSS. PEDOT:PSS is a polymer mixture of the two phases, PEDOT and PSS, wherein PEDOT is doped with PSS. PEDOT:PSS is a transparent/semitransparent conducting polymer mixture with high ductility in different applications. PEDOT:PSS can be electropolymerized or polymerized in water in the form of an emulsion. With the addition of a high boiling point solvent such as dimethylsulfoxide, thin films of PEDOT:PSS can reach electrical conductivities of about 1000 S/cm. PEDOT:PSS also provides a wide and clear electrochemical potential window. Furthermore, PEDOT:PSS provides a high resistance to corrosion, in particular in acid environments.

In some embodiments, the electrochemical conversion involves transfer of 2 protons and 2 electrons per molecule susceptible to electrochemical conversion. The electrochemical conversion is preferably a redox conversion. The term transfer is supposed to denote that electrons and protons transfer from/to the electrode to/from the molecule susceptible to electrochemical conversion. As such, depending on the direction of the transfer, the molecule susceptible to electrochemical conversion is either oxidized or reduced. In an example, the molecule susceptible to electrochemical conversion is hydroquinone. By transfer of two electrons and two protons to the electrode the hydroquinone is oxidized to 1,4-benzoquinone. Consequently, 1,4-benzoquinone may be reduced into hydroquinone by transfer of two electrons and two protons from the electrode to the 1,4-benzoquinone.

In yet another example, the molecule susceptible to electrochemical conversion is catechol. By transfer of two electrons and two protons to the electrode the hydroquinone is oxidized to 1,4-benzoquinone. Consequently, 1,2-benzoquinone may be reduced into catechol by transfer of two electrons and two protons from the electrode to the 1,2-benzoquinone

According to some embodiments of the present invention, the molecule susceptible to electrochemical conversion is selected from the group consisting of catechol, hydroquinone, benzoquinone or a combination thereof.

In one example, the benzoquinone is 1,4-benzoquinone or 1,2-benzoquinone.

In some embodiments, the molecule susceptible for electrochemical conversion is obtained from the depolymerisation of lignin. Lignin is an abundant, renewable raw material obtainable from for example black liquor. Approximately 170 million tonnes/year of black liquor is produced each year as a by-product from the paper and pulp industry.

In another aspect of the present invention, there is provided a use of the electrode system according to the present invention for electrochemical conversion of the molecule susceptible to electrochemical conversion. In particular, there is provided a use for the electrode system according to the present invention where electrochemical conversion involves transfer of 2 protons and 2 electrons per molecule of the molecule susceptible to electrochemical conversion.

According to another aspect of the present invention, there is provided a use of the electrode system disclosed herein in a fuel cell. A fuel cell is an electrochemical cell that converts chemical energy from a fuel into electricity through an electrochemical reaction of a fuel. A fuel cell generally comprises a cathode electrode, an anode electrode, an electrolyte and a fuel. The electrode system of the present invention may be used in a fuel cell wherein the electrode acts as anode and the molecule susceptible to electrochemical conversion acts as fuel. The cathode may for example be a Pt/Ru-electrode and the electrolyte any suitable electrolyte known to a person skilled in the art.

The electrode system disclosed herein provides an electrochemical conversion which provides a high reversibility, making it suitable for use in fuel cell applications.

In one aspect, there is provided a use of the electrode system in a flow battery. Flow batteries are a type of electrochemical cell comprising an anode and a cathode wherein chemical energy is provided by two chemical components dissolved in liquid and separated by a membrane. As an example, one of the anode or cathode may comprise the polymer electrode disclosed in the first aspect of the present disclosure

In some embodiments, both the anode and the cathode comprises a polymer electrode as defined in relation to the first aspect of the present disclosure. In some examples, the flow battery utilizes at least two different molecules susceptible to electrochemical conversion as fuel. Preferably, the at least two molecules are susceptible to electrochemical conversion involving transfer of 2 protons and 2 electrons per molecule susceptible to electrochemical conversion.

An advantage provided by a flow battery wherein both the anode and the cathode comprises the polymer electrode disclosed in relation to the first aspect of the present disclosure is that the the advantageous and highly reversible electrochemical conversions disclosed in relation to the first aspect can be provided at both the cathode and the anode. Such advantageous electrochemical conversions may involve the transfer of two electrons and two protons.

The electrode system disclosed herein provides an electrochemical conversion which provides a high reversibility, making it suitable for use in flow batteries.

In another example of the invention, there is provided a use of the electrode system in electrochemical synthesis. In an example, there is provided a use of the electrode system in an electrochemical synthesis of benzoquinone from hydroquinone, or vice versa.

In an example, there is provided a use of the electrode system in an electrochemical sensor.

In yet another example, there is provided a use of the electrode system in electrocatalysis.

According to another aspect of the invention there is provided a fuel cell comprising the electrode system disclosed herein.

According to another aspect of the invention there is provided a flow battery comprising the electrode system disclosed herein

According to another aspect illustrated herein, there is provided a process for electrochemical conversion in a system comprising a polymer electrode having an electron conductive phase, a proton conductive phase and a molecule susceptible to electrochemical conversion, wherein the process comprises the steps of

a) bringing the molecule into contact with the polymer electrode; and
b) allowing the molecule to undergo electrochemical conversion.

The inventors have surprisingly realised that the process for electrochemical conversion disclosed herein yields a high current density and high reversibility. Without wishing to be bound by any specific scientific theory, it is believed that the reversibility of the conversion is governed by contacting of the molecule susceptible to electrochemical conversion with the polymer electrode, and more particularly with the proton conducting phase of the polymer electrode. The proton conducting phase allows for the transport of protons between the proton conducting phase and the molecule susceptible to electrochemical conversion. This allows for an enhancement of the proton-associated redox kinetics, yielding a high current density and high reversibility.

In some embodiments of the process disclosed herein, the electrochemical conversion comprises transfer of 2 protons per molecule between the molecule and the proton conducting phase; and transfer of 2 electrons per molecule between the molecule and the electron conducting phase.

Many molecules obtainable from the depolymerisation of lignin, such as benzenediols, are energy-rich molecules that can store two electrons per aromatic ring. For example, the oxidation of hydroquinone to benzoquinone involves the transfer of two electrons and two protons. Similarly, the reduction of benzoquinone to hydroquinone also involves the transfer of two electrons and two protons.

According to embodiments of the process, said electron conducting phase comprises a conducting polymer, preferably a p-type conducting polymer, more preferably doped poly(3,4-ethylenedioxythiophene) (PEDOT).

In some embodiments of the inventive process, the proton conducting phase comprises a polyanion, preferably polystyrene sulfonate (PSS). Preferably, the proton conducting phase is capable of acting as a counter-ion balancing the positive charge of the electron conducting phase. Polyanions are a type of polyelectrolytes, i.e. polymers having a repeating unit comprising a negatively charged group. One group of polyanions of particular interest are polyanionic acids. Polyanionic acids generally have a high proton conductivity and are therefore suitable to act as the proton conducting phase of the present invention.

Polystyrene sulfonate (PSS) is a polyanionic acid commonly used as a counter-ion to PEDOT. Thus, in some preferred embodiments the proton conducting phase comprises PSS. The proton conducting phase may also comprise tosylate (tos) or chloride ions.

In some examples, the electron conducting phase is PEDOT and the proton conducting phase is PSS.

The molecule susceptible to electrochemical conversion may be selected from the group consisting of catechol, hydroquinone, benzoquinone or a combination thereof.

According to some embodiments, said process is performed in a fuel cell or a flow battery.

Other aspects and preferred embodiments of the present invention will be evident from the following detailed description and the appended claims.

**Brief description of the drawings**

In the detailed description that follows below, reference will be made to the accompanying figures, on which:

Figure 1a is a cyclic voltamogram recorded at different electrodes: platinum (solid line), glassy carbon (dash line), PEDOT:PSS (around 630 nm in thickness) (dot line) and PEDOT:tos (around 700 nm in thickness) (dash dot line); with an electrolyte of: 1 mM HQ in 0.1 M $H_2SO_4$, scan rate 50 mV/s)

Figure 1b shows the evolution of the potential difference $\Delta E$ (solid line) and the ratio of $i_{pa}/i_{pc}$ (dash line) at varying scan rates for the four electrodes: Pt (line with square), glassy carbon (line with circle), PEDOT:PSS (around 630 nm in thickness) (line with triangle), PEDOT-Tos (around 700 nm in thickness) (line with star)

Figure 1c shows the dependence of oxidation faradic current density (dash line with hollow circle) and capacitance (solid circle with solid fitting line) on the thickness of PEDOT:PSS film at different scan rates; 5mV/s, 10 mV/s, 20 mV/s, 50 mV/s, 80 mV/s, 100 mV/s, 200 mV/s.

Figure 2a shows cyclic voltammograms recorded at a platinum electrode with 1 mM HQ in 0.1 M $H_2SO_4$ solution at scan rate of 5mv/s, 10mv/s, 20mv/s, 50mv/s, 80mv/s, 100mv/s, 200mv/s.

Figure 2b shows cyclic voltammograms recorded at a glassy carbon electrode with 1 mM HQ in 0.1 M $H_2SO_4$ solution at scan rate of 5mv/s, 10mv/s, 20mv/s, 50mv/s, 80mv/s, 100mv/s, 200mv/s.

Figure 2c shows cyclic voltammograms recorded at a PEDOT:PSS (around 630nm) electrode with 1 mM HQ in 0.1 M $H_2SO_4$ solution at scan rate of 5mv/s, 10mv/s, 20mv/s, 50mv/s, 80mv/s, 100mv/s, 200mv/s.

Figure 2d shows cyclic voltammograms recorded at a PEDOT:tos electrode (around 700 mm) with 1 mM HQ in 0.1 M $H_2SO_4$ solution at scan rate of 5mv/s, 10mv/s, 20mv/s, 50mv/s, 80mv/s, 100mv/s, 200mv/s.

Figure 3a shows a cyclic voltammogram of using PEDOT:PSS (thickness=1028nm) as working electrode at different pH values. Electrolyte: 1 mM HQ in 0.1 M $H_2SO_4$.

Figure 3b shows the redox potential versus pH for the sample of Figure 3a.

Figure 3c shows a pH study of voltametric response (peak current density and potential difference) for the sample of Figure 3a.

Figure 4a shows rotating disk voltammograms at glassy carbon electrodes without (dash curve) or with (solid curve) PEDOT:PSS film of different thickness in electrolyte of 1 mM HQ or 1 mM BQ initially presenting in 0.1 M $H_2SO_4$, rotating speed: 1000rpm, 1500rpm, 2000rpm, 2500rpm, 3000rpm, 3500rpm.

Figure 4b shows the electron numbers transferred at varying thickness and rotating speed, calculated from Fig. 4a according to $\log((i_l/i)-1)$ vs. E (solid curve: HQ initially exist, dash curve: BQ initially exist; upper triangle: rotating speed is 3500rpm, lower triangle: rotating speed is 1000rpm

Figure 4c shows the diffusion coefficient of 1 mM HQ in 0.1 M $H_2SO_4$ (line with squares) or 1 mM BQ in 0.1 M $H_2SO_4$ (line with circles) at bare glassy carbon electrode or glassy carbon with PEDOT:PSS film of different thickness.

Figure 4d shows a plot of the natural logarithm of the kinetic rate constant k as a function of applied potential E in the kinetically controlled region of overpotentials for HQ→BQ and BQ→HQ at glassy carbon electrode without (dot line) or with PEDOT:PSS (solid line) of different thickness, respectively. Solid line with circle: 101 nm, Solid line with upper triangle: 239nm, Solid line with lower triangle: 438nm, Solid line with diamond: 514nm, Solid line with left triangle: 726nm, Solid line with right triangle: 848nm.

Figure 5a shows a schematic illustration of the redox reaction at PEDOT:PSS.

Figure 5b shows oxidation of hydroquinone in a fuel cell using PEDOT:PSS as one of the electrodes.

Figure 5c is a schematic illustration of the polarization for anode-limited quinone fuel cell elaborated on stagnant electrodes with PEDOT:PSS; PEDOT:Tos; Pt; and glassy carbon anodes, respectively.

Figure 5d is a schematic illustration of the power density curves for anode-limited quinone fuel cell elaborated on stagnant electrodes with PEDOT:PSS; PEDOT:Tos; Pt; and glassy carbon anodes, respectively.

Figure 6a shows schematic illustration of the discharge process of a Alizarin Red S and catechol based flow battery using PEDOT:PSS in both of electrodes.

Figure 6b shows the chemical reactions taking place at the anode and cathode, respectively, as well the overall reaction of the discharge process of a Alizarin Red S and catechol based flow battery using PEDOT:PSS in both of the electrodes.

Figure 6c shows a discharge plot of Alizarin Red S and catechol based flow battery using PEDOT:PSS in both of the electrodes.

Figure 6d shows a diagram of charge process of a Alizarin Red S and catechol based flow battery using PEDOT:PSS in both of the electrodes.

Figure 6e shows the chemical reactions taking place at the anode and cathode, respectively, as well the overall reaction of the charge process of a Alizarin Red S and catechol based flow battery using PEDOT:PSS in both of the electrodes.

Figure 6f shows a charge plot of Alizarin Red S and catechol based flow battery using PEDOT:PSS in both of the electrodes.

## Detailed description

In the following non-limiting Examples, the principle of an electrode system comprising an electrode and a molecule susceptible to electrochemical conversion according to the invention is shown.

Examples

*Reagents and electrode preparation*

All inorganic salts, hydroquinone (HQ), benzoquinone (BQ), catechol and (3-glycidyloxypropyl)trimethoxysilane (GOPS) were purchased from Sigma (Sweden) and used as received. Clevios Poly(3,4-ethylenedioxythiophene) and poly(styrenesulfonate) (PEDOT:PSS, PH1000) was purchased from Heraeus Holding GmbH. Experiments were carried out with Milli-Q water from a Millipore Milli-Q system.

Microscopic slides were utilized as a solid isolative support for the fabrication of PEDOT:PSS films. First, the ends of the slides were sequentially covered by a layer of chromium (10nm) and gold (50nm) to ensure a good electric contact between the crocodile clip and PEDOT:PSS films. Importantly, the contacts between the conducting polymer films and metal layers remained dry during all electrochemical measurements to ensure the absence of metal electrode contribution in the registering currents. Then metal-modified glass slides were cleaned with soap and rinsed with acetone, distill water and isopropanol. Then the slides were treated with UV-ozone in Ozone cleaning device (Model: PSD-UV8) for 15 minutes. A suspension of PH1000, DMSO, 10 mM glycerol, GOPS (Volume fraction volumetric ratio of 94%, 4%, 1.5% and 0.5%) are used in the solution for spin coating. DMSO is used to enhance solubility, glycerol is to increase the viscosity and GOPS is used as crosslinking agent. After spin coating, the slides were heated up to 140 °C for polymerization for 30 minutes.

Poly(3,4-ethylenedioxythiophene)tosylate (PEDOT:tos) electrodes were prepared by chemical polymerization from a mixture of Clevios CB-54 [40wt% iron(iii)-tosylate in butanol] and EDOT monomer. Clevios CB-54 was stabilized by adding Pyridine and stirring for 1h.

*Cyclic voltammetry*

Cyclic voltammetry is an important electroanalytical technique. It is rarely capable of quantitative determination, but widely applied in the study of redox processes, for understanding the reaction intermediates and the stability of reaction products. Cyclic voltammetry experiments were performed in an aqueous solution of 1 mM HQ and 0.1 M $H_2SO_4$ (for the pH experiments below, the supporting electrolyte is NaCl) at room temperature with a computer controlled potentiostat (SP200, BioLogic)). Ag/AgCl saturated by 3M KCl solution was used as the reference electrode while a platinum mesh was used as the counter electrode. For each sample, scan rates of 5 mV/s, 10 mV/s, 20 mV/s, 50 mV/s, 80 mV/s, 100 mV/s, 200 mV/s were used. For the measurements, PEDOT:PSS film-modified glass slides (around 630 nm film thickness) as a stationary working electrode were compared to a platinum electrode, a glassy carbon electrode and a PEDOT:tos film electrode (around 700 nm thickness). 85% of Ohmic drop correction (determined by an impedance measured at 50kHz, 20mV amplitude prior to each voltammetry measurements) were performed to compensate the solution resistance.

*pH experiments*

The measurements at different pH values were carried out in 1 mM solution of HQ in different NaCl-based buffers of the same electrolyte concentration (ionic strength=0.12 M). 0.1 M NaCl aqueous solution was prepared first and used as base solution. Then acetic acid or sodium acetate were present in the NaCl aqueous base at 0.1 M concentration. In the pH range 3-6, 10ml mixture solution consists of acetic acid and sodium acetate solution are added into 50ml NaCl aqueous base with different ratio for different pH values. In the pH range below 3, a solution of 0.1 M HCl in a 0.017 M NaCl aqueous are used. Details are listed in Table 1 below.

Table 1. The composition of the buffer of 1 mM HQ solution with different pH values

| Composition | | pH (before adding HQ) | pH (after adding HQ) |
|---|---|---|---|
| 60ml 0.1 M HCl in 0.1 M NaCl | | 1.05 | 1.25 |
| 10ml 0.1 M HCl+50ml 0.1 M NaCl | | 1.80 | 1.81 |
| The ratio of $CH_3COOH$: | 10:0 | 3.3 | 3.25 |
| $CH_3COONa$ in mixture | 8:2 | 4.07 | 4.05 |
| solution [10ml ($CH_3COOH$: | 5:5 | 4.68 | 4.68 |
| $CH_3COONa$)+ 50ml | 2:8 | 5.27 | 5.31 |
| 0.1 M NaCl] | 0:10 | 7.27 | 7.25 |

*Rotating disc electrode*

In 1962, Levich et al. published his theory on Rotating disk electrode (RDE). After that, RDE has been applied intensively to quantitatively study electrode kinetics and mechanisms. RDE makes it possible to precisely control mass transport by adjusting the rotating speed; moreover, unlike in static solution, RDE current is independent of scan rate at moderate to high rotating speeds, because the mass transport is fast enough in solution and thus a steady state of electrode current can be reached immediately following establishment of applied potential.

In the RDE experiments, a glassy carbon electrode (GCE, 5 mm diameter) was used in the setup of rotating disk electrode (RDE, Pine Research Instrumentation Inc., USA) in a one compartment electrochemical cell having a volume of 200 ml. PEDOT:PSS films were deposited on the glassy carbon electrode via blend drop-casting followed by the heating (60 °C for 15 minutes). The film thickness was controlled by the blend volume by deducing from the capacitance currents acquired by cyclic voltammetry. Six samples with the following PEDOT:PSS film thicknesses were prepared: 101 nm, 239nm, 438nm, 514nm, 726nm and 848nm, respectively. The rotating rates were 1000, 1500, 2000, 2500, 3000 and 3500 rpm, respectively. The scan rate of linear sweep voltammetry is 20mV/s. The reference electrode is the same as for the cyclic voltammetry. The PEDOT:PSS electrodes were compared with a platinum (Pt) electrode, a glassy carbon electrode and a PEDOT:Tosylate (Tos) electrode.

*Results*

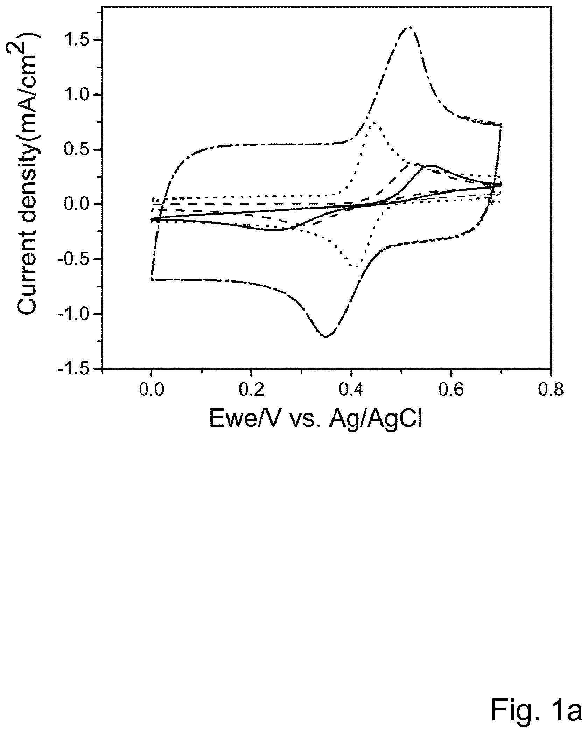

To visualize the faradaic process of HQ/BQ redox couple, cyclic voltammetry on the different electrodes (glassy carbon, Pt, PEDOT:Tos, PEDOT:PSS) was performed, see Figure 1a. The presence of single oxidation and reduction peak currents of HQ/BQ conversion is visible on all electrode materials, which corresponds to the merging of two consecutive single electronic transitions into the synchronized two electronic process. The two PEDOT-based film electrodes showed larger capacitive currents (e.g. at 0.1 V) in comparison with the glassy carbon and platinum electrodes. This illustrates the porous nature of conducting polymer film available for the establishment of double layers in the bulk of the polymer. PEDOT:tos film showed larger capacitive currents than PEDOT:PSS, due to higher density of PEDOT and smaller contribution from isolative primitive dopant for the PEDOT:tos, indicated by thiophene-sulfonate ratio $R_{T/S}$ $R_{T/S}$. Indeed, PEDOT:PSS is composed of 2.5 times more PSS than PEDOT and this makes this material less conducting and also more hydrophilic, which on the other hand makes it easy to swell in aqueous electrolytes, promoting proton diffusion due to steric effect. Moreover, PSS, as polyacid, is a very good proton conducting material, providing high proton concentration close to PEDOT. The faradic current at conducting polymer PEDOT:PSS (around 630nm), PEDOT:tos(around 700nm) electrode is much higher than that at Pt and glassy carbon electrode.

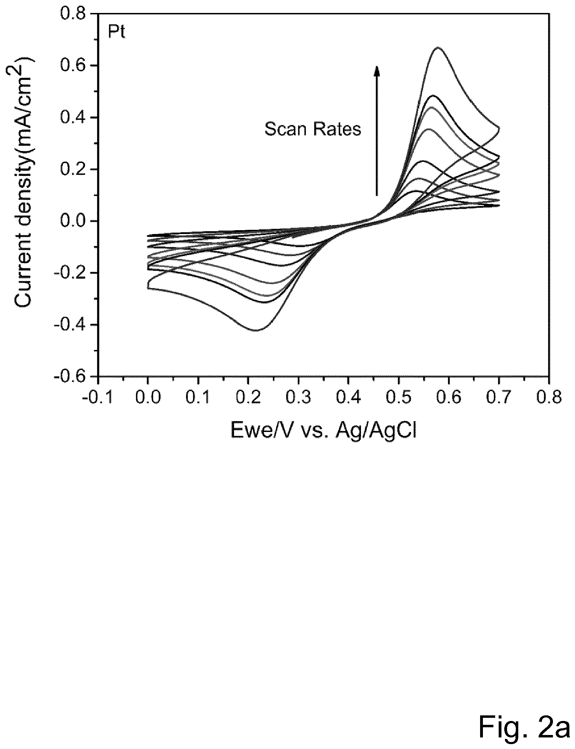

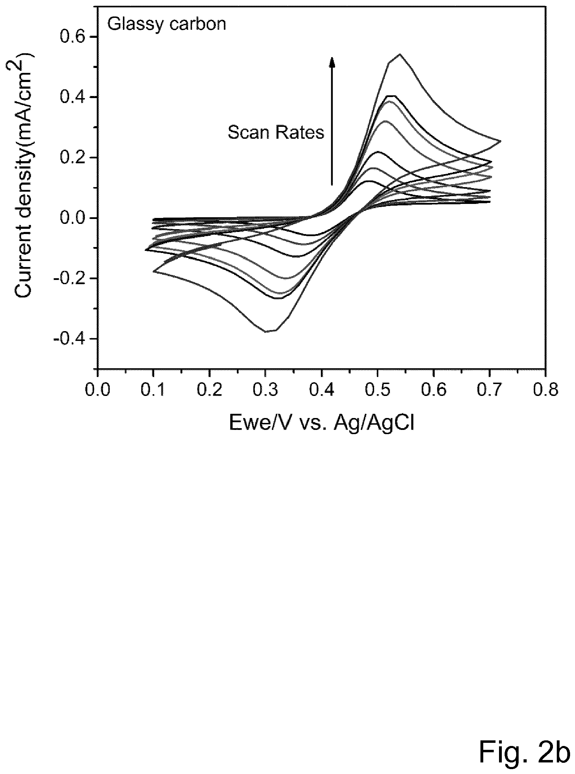

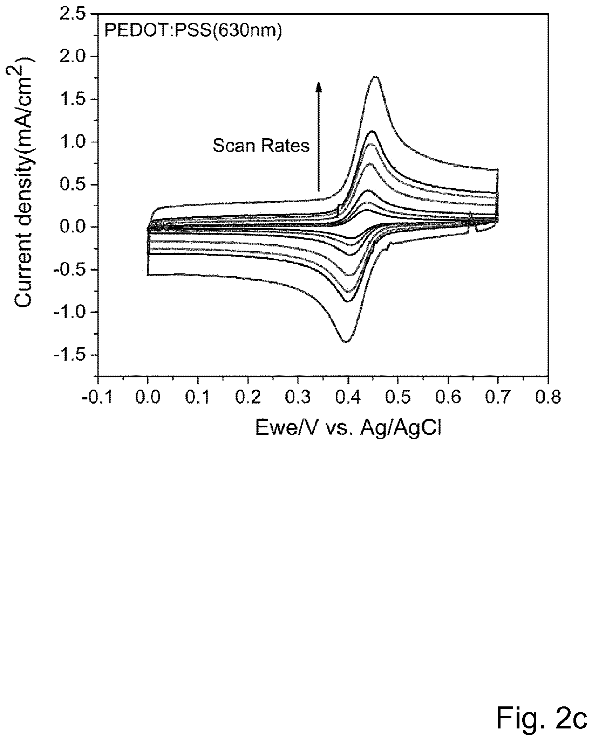

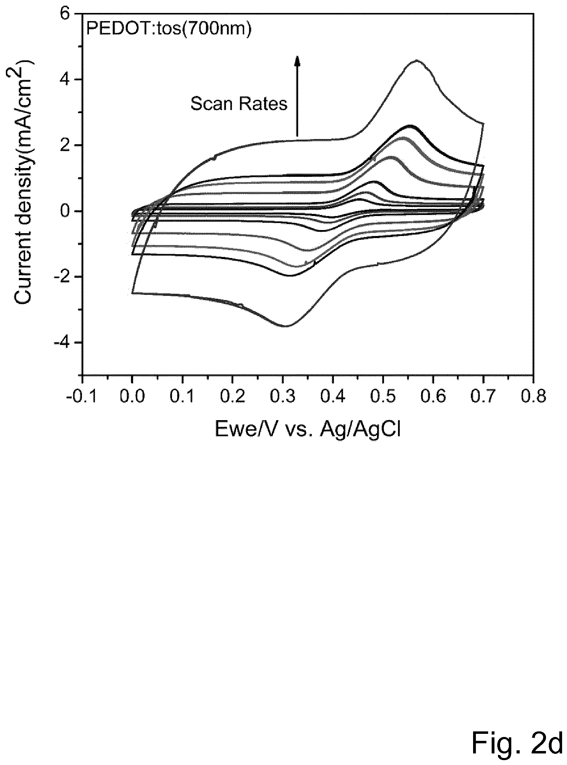

This is further illustrated in Figs. 2a-d, showing cyclic voltamograms for the four different electrode types at different scan rates.

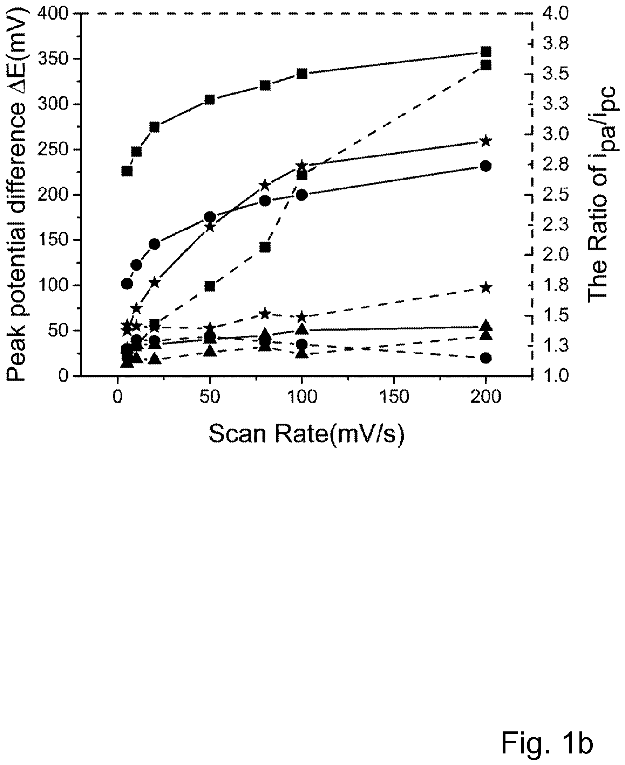

The potential of peak-to-peak separation ($\Delta Ep$) varies significantly with different electrode materials see Fig. 1b. Both the platinum electrode and the glassy carbon electrode showed large values of $\Delta Ep$ (306 mV and 211 mV, respectively, at 50 mV/s), while PEDOT:tos film showed smaller value of $\Delta Ep$ (160 mV at 50 mV/s). PEDOT:PSS revealed the lowest $\Delta Ep$ (31 mV at 50mV/s).

Coherently, the scan rate dependencies of $\Delta Ep$, see Fig. 1b, obtained for the platinum electrode, glassy carbon electrode and PEDOT:tos electrodes showed a larger increase than expected for reversible two-electron electrode reaction (34.5 mV) (for an ideal reversible process with n electrons, an $\Delta Ep=59.1$ mV/n is expected, independent of scan rate). PEDOT:PSS showed scan-rate independent $\Delta Ep$ values (from 25 mV to 45 mV) close to theoretical limit. The irreversible character of HQ/BQ process on platinum and GCE has been also illustrated by large values of the ratio between anodic and cathodic peak currents ($i_{pa}/i_{pc}$), reaching 3.5 and 1.7, respectively (at 200mV/s), while PEDOT:PSS film revealed scan rate-independent $i_{pa}/i_{pc}$ close to 1, which confirms the reversibility of the redox process. All these observations illustrate the fast reversible HQ/BQ redox processes happening in the PEDOT:PSS electrode.

Contrary to PEDOT:PSS, PEDOT:tos experiences the lack of proton supply. Having a lower electronic conductivity, PEDOT:PSS manifests significantly faster proton-associated redox phenomena illustrating the control by the ionic process as a rate-determining step (RDS) of a whole electrode reaction happening on conducting polymer. In other words, sacrificing the electronic conductivity due to blending with an insulator (e.g. PSS), the complex redox process shows higher rates due to the boost of RDS by the increase of proton transport.

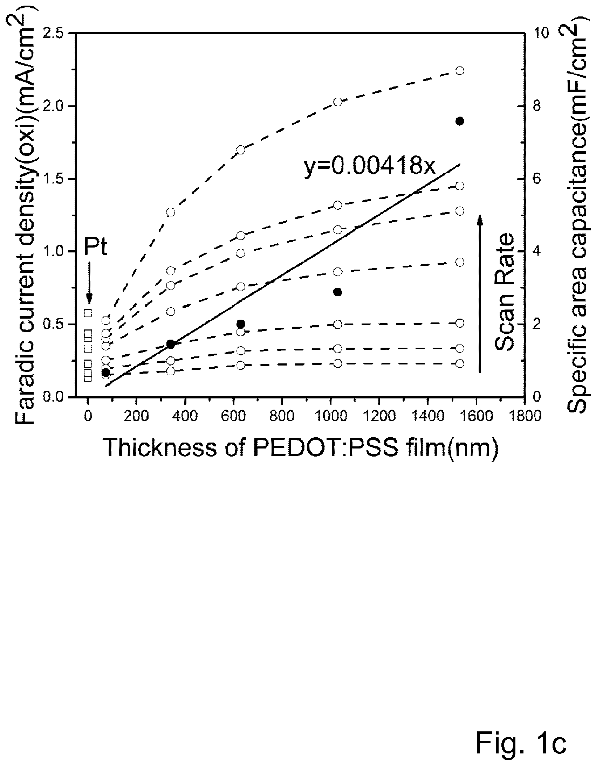

To decouple the faradaic and capacitive processes, a film thickness dependence study for the PEDOT:PSS electrode has been undertaken, see Fig. 1c. The capacitive currents scale linearly with the film thickness, showing an access to the bulk of PEDOT:PSS for the ions of the background electrolyte to establish the double layers due to the appropriate ionic conductivity maintained by PSS. Contrary to the capacitive currents relied on in the small ions phenomenon, the oxidation peak current density experience saturation at high thicknesses due to the lack of the access to the bulk of the polymer for the larger, neutral HQ and BQ molecules. The porosity of the PEDOT:PSS film for HQ/BQ redox couple yields the larger faradic currents in comparison with collected smooth electrodes (e.g platinum and glassy carbon electrode) showing the significant excess of surface area available for faradaic process over the geometrical macroscopic surface area, considering the conductivity of Pt ($9.4*10^6$ S/cm) is 3 orders of magnitude larger than PEDOT:PSS (~103 S/cm). Interestingly, compared to slow voltammetric scan rates, a fast potential ramp led to larger oxidation current densities on thicker PEDOT:PSS film electrodes, which illustrate the access of deeper pores by higher field gradients.

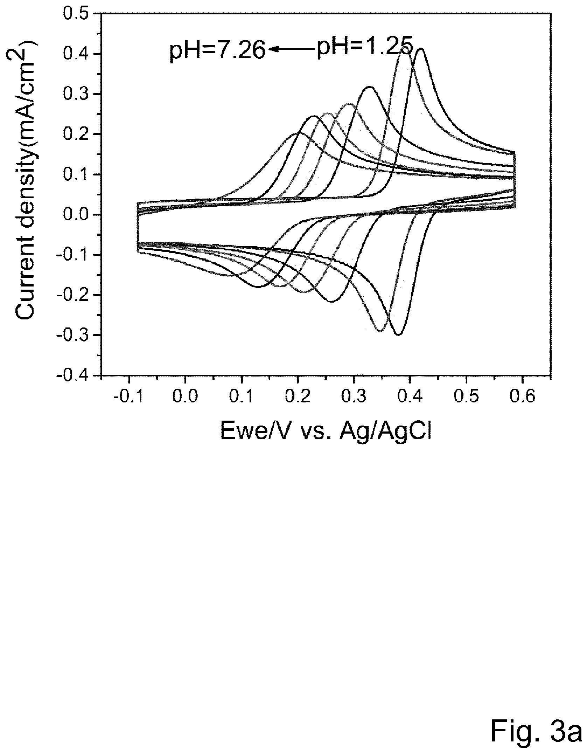

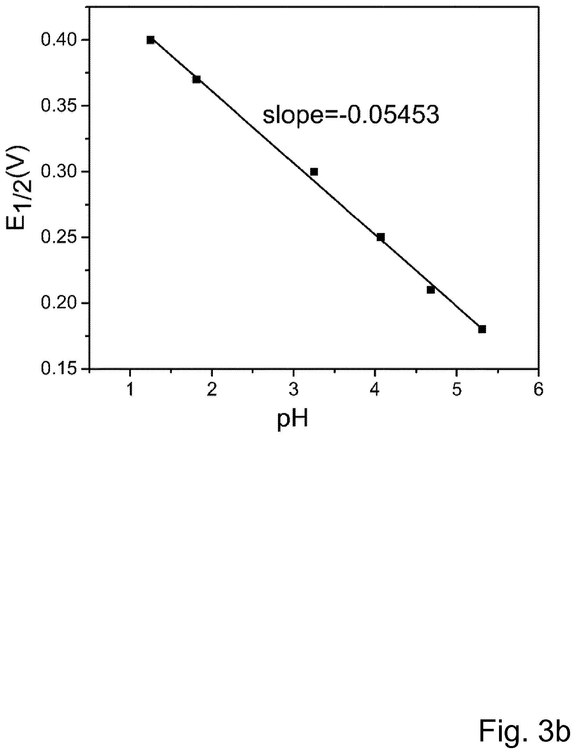

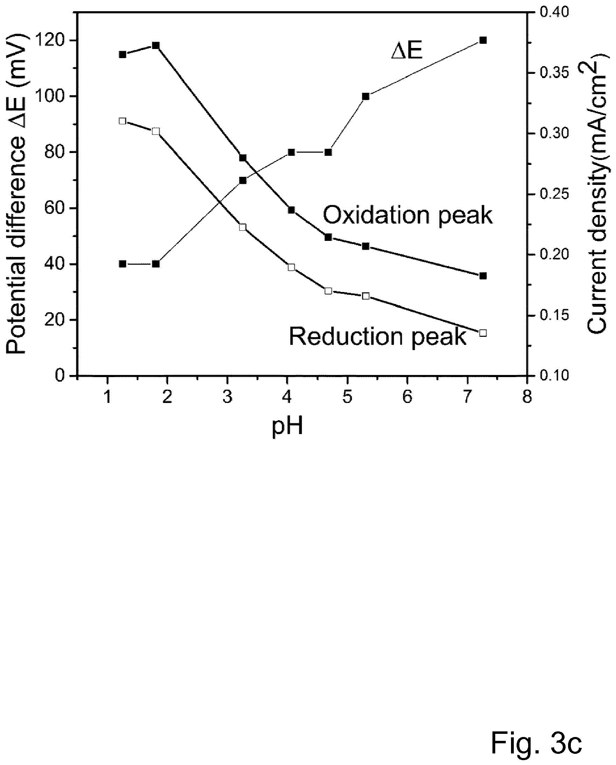

The pH study of voltammetric response is displayed in Figs. 3a-c. The decay of redox peak current densities visible at high pH values (Fig. 3a) is attributed to the decrease of electrical conductivity of PEDOT:PSS as reported in literature. There is also a Nernstian shift of the formal potential of redox couple (0.055 V/pH, displayed in Fig. 3b), illustrating the equal number of protons and electrons involved in the electrode reaction.

Interestingly, $\Delta$Ep increases with pH (from 40 mV at pH=1 to 120 mV at pH=7.5) indicating the effect of proton concentration in the media on the electrode process kinetics. This phenomenon supports the importance of the establishment of an appropriate proton transport within porous electrode for fast reaction with benzendiols

*Kinetic analysis by rotating disk electrode measurements*

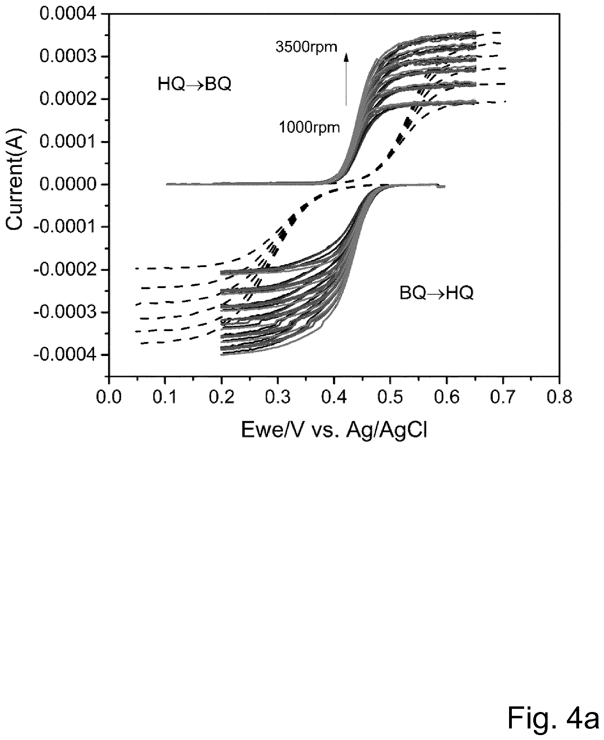

The measurements on rotating disc electrodes were utilized for the quantification of HQ/BQ reaction kinetics on PEDOT:PSS film-modified GCE, see Figs. 4a-d. The decrease of the overpotential for both oxidation and reduction half-reactions in comparison with glassy carbon electrode is visible, see Fig. 4a illustrating the film electrocatalysis of HQ/BQ conversion. Moreover, the presence of PEDOT:PSS film led to the observation of larger steady-state currents for BQ reduction.

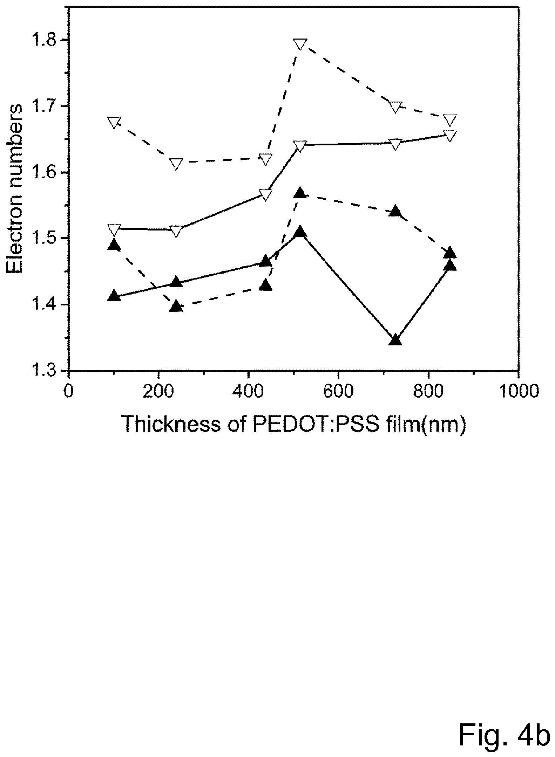

Assuming the validity of the Butler-Volmer model for electrode reaction at low overpotentials (below 150 mV), the kinetic parameters have beed evaluated. The number of electrons obtained from the slope of $\log((i_l/i)-1)$ vs. E, where $i_l$ is the limiting current and i is the corresponding current at potential E, revealed a minor thickness dependence, reaching values around 1.4 to 1.8 electrons, see Fig. 4b, tranfered to PEDOT:PSS film from BQ, which is close to 2 as estimated from the potential of peak-to-peak separation (31 mV at 50 mV/s).

The analysis of voltammetry data obtained on RDE was based on Koutecky-Levich equation

$$\frac{1}{i} = \frac{1}{nFAkC} + \left(\frac{1}{0.62nFAD^{2/3}v^{-1/6}C}\right)\omega^{-1/2} \qquad (1)$$

wherein i is the recorded current, n is two moles as calculated above, F is the Faraday constant A is the electrode area (0.19635 cm$^2$), D is the reactant species diffusivity (cm$^2$/s), $\omega$ is the rotation rate of the disk (radians/s), v is the kinematic viscosity of the electrolyte (0.1 M H$_2$SO$_4$, v=0.0101 cm$^2$/s) and C is the bulk concentration of reactant (hydroquinone, 10$^{-6}$ mole/cm$^3$).

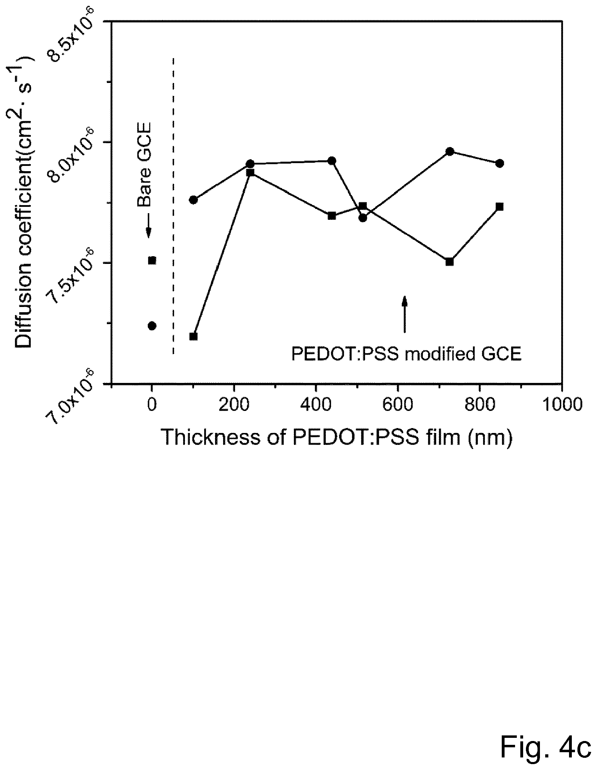

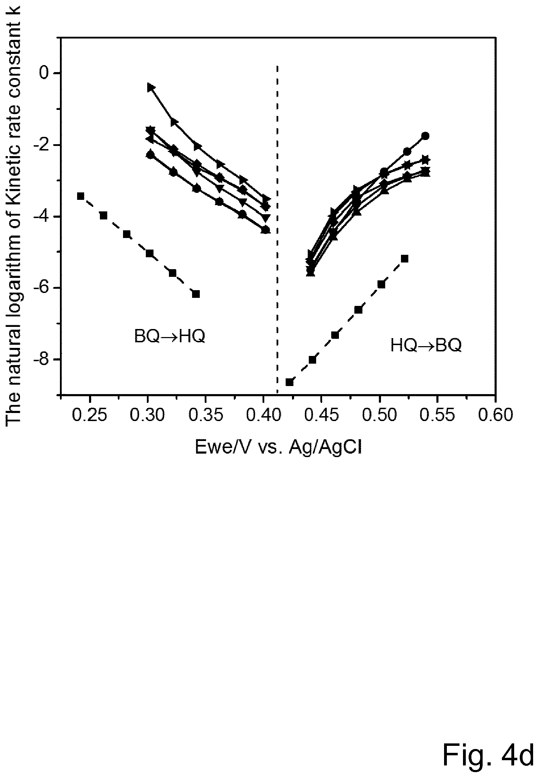

Acquiring the RDE voltammetry in HQ or BQ solutions, the diffusion coefficients D can be gained from the slope of i$^{-1}$ vs. w$^{-1/2}$ plots, while kinetic current i$_k$ can be obtained from the intercept. Showing a minor thickness dependence, see Fig. 4c, the values of diffusion coefficient were around 7.71*10$^{-6}$ cm$^2$s$^{-1}$ for HQ and 7.88*10$^{-6}$ cm$^2$s$^{-1}$ for BQ at PEDOT:PSS electrodes, which is quite close to reported for platinum (7.4$\pm$0.2)*10$^{-6}$ cm$^2$·s$^{-1}$ in 0.1 M KNO$_3$. Having an independence on the film thickness, the kinetic rate constants for both oxidation and reduction processes showed a significant increases in comparison with the glassy carbon electrode , see Fig. 4d illustrating the superior performance of PEDOT:PSS films for proton-associated redox conversion.

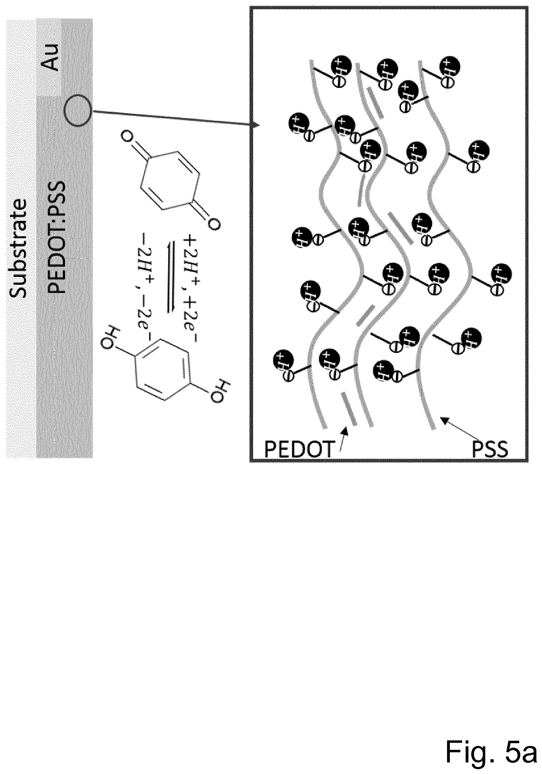

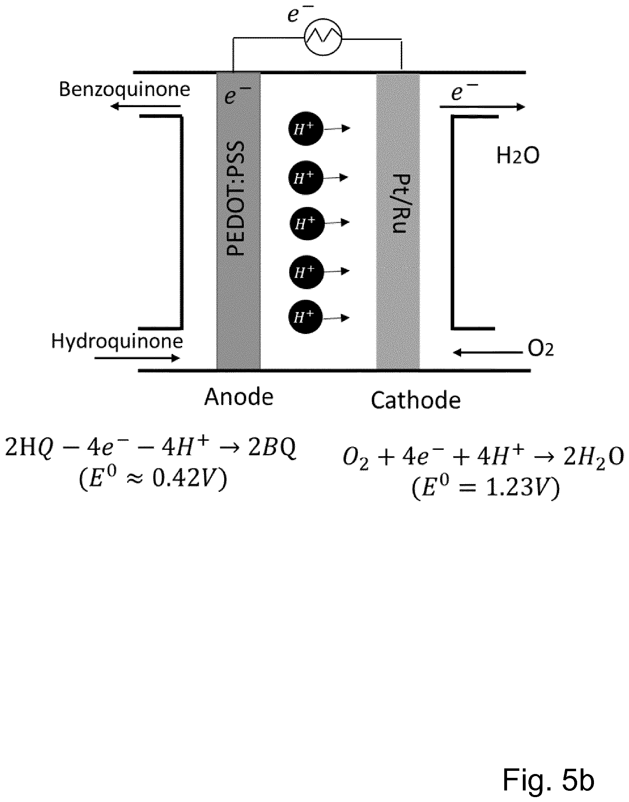

The main reason of high performance of PEDOT:PSS film electrode for proton-associated redox reaction is believed to be the well-established proton transport via abundant acidic groups from PSS, see the schematic illustration in Fig.5a. The addition of electronically insulating polyelectrolyte, which sustains the efficient proton transport within the porous electrode as the rate determining step of the whole process, yields in the increase of the rates of proton-associated redox phenomena. This result would promote the use of widely abundant redox motif towards the energy conversion system, such as flow battery and the hydroquinone fuel cell, see schematic illustration in Fig. 5b.

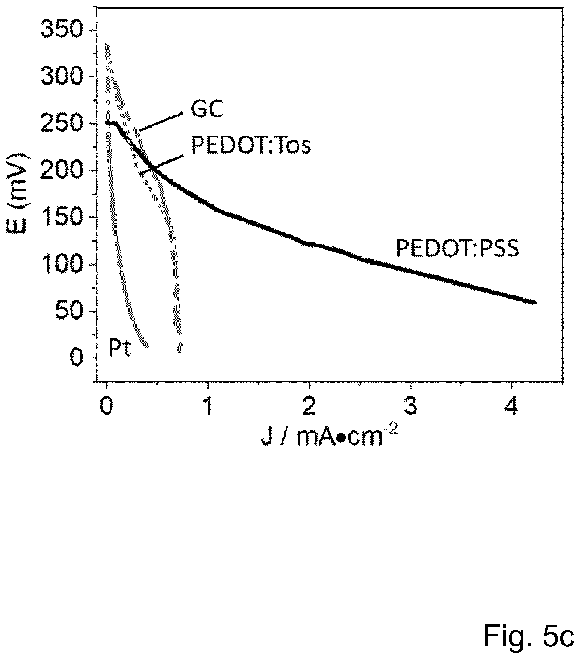

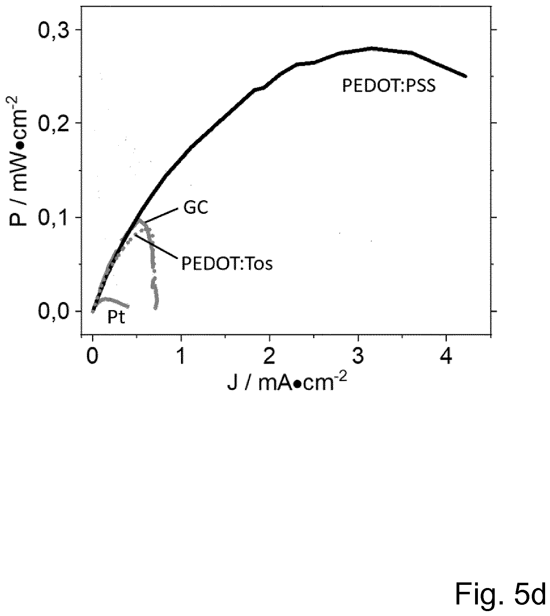

Figs. 5c and 5d shows the polarization curves and power density curves, respectively, for fuel cells with quinone (hydroquinone, HQ) as the molecule susceptible for electrochemical conversion using a PEDOT:PSS electrode compared to PEDOT:Tos, Pt and glassy carbon electrodes, respectively.

The experimental setup was as follows. A model quinone fuel cell assembled in stagnant oxygen-saturated catholyte and HQ-containing anolyte separated by a porous glass frit (of resistance 300 $\Omega$). A Pt wire in oxygen-saturated electrolyte was utilized for functional evaluation of anode-limited power sources.

In agreement with the results discussed above the for the kinetics of the HQ/BG interconversion, PEDOT:PSS based quinone fuel cells showed the smallest value of kinetic loss. This may be attributed to a faster HQ oxidation at small current densities, yielding th highest value of maximum power density (0.281 mW cm$^{-2}$) among other electrodes (PEDOT:Tos, Pt, GC). Essentially, the trend PEDOT:PSS > PEDOT:Tos > GC > Pt in HQ/BQ conversion efficiency was obtained in both material and device performance evaluations.

The power density is related to the rate of electron transfer that is proportional to the concentration in reactant. Hence, one can extrapolate the maximum power of the DQFC for a high concentration of hydroquinone (0.5 M) in water to be about 28 mW cm$^{-2}$. Moreover, the set-up used for this proof of concept possesses a large ionic resistance due to the glass frit (300 $\Omega$); which could be decreased ten times with a proton membrane in an optimized fuel cell. Hence, an extrapolated maximum power may reach aprroximately 280 mW cm$^{-2}$

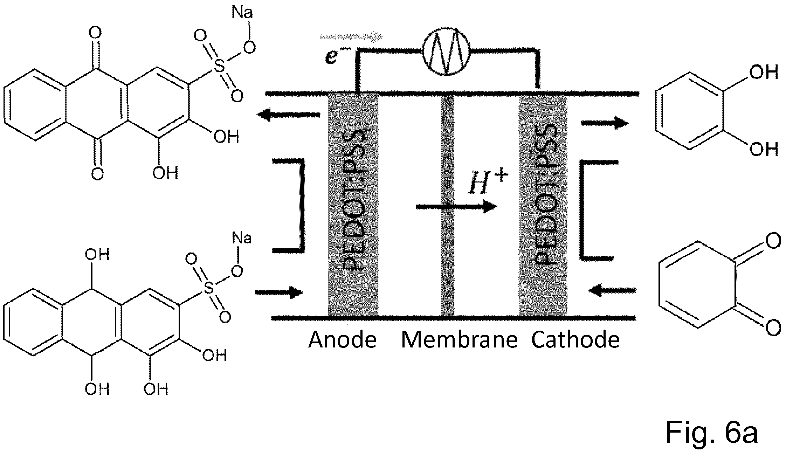

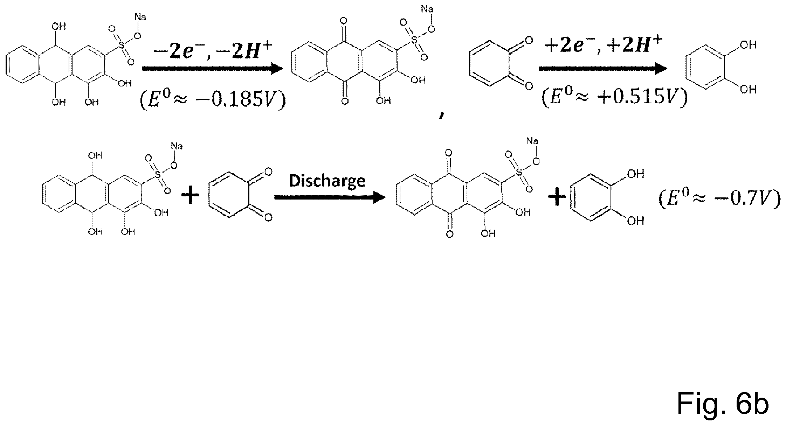

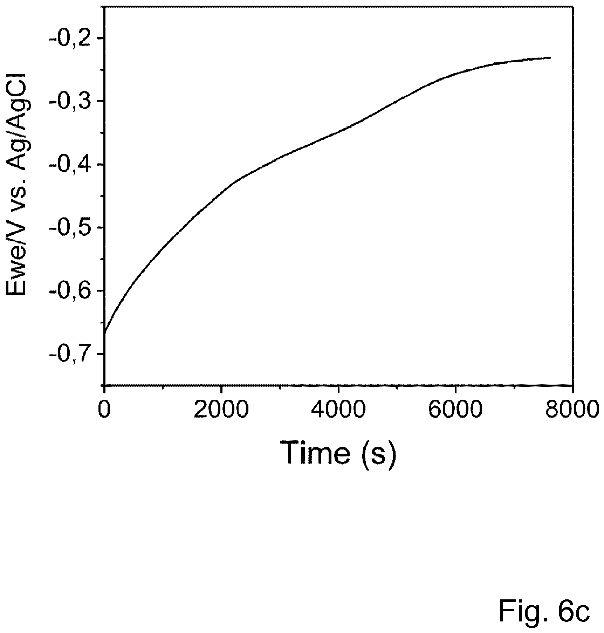

Figs. 6a shows a schematic discharge of a flow battery using PEDOT:PSS electrodes as both the anode and cathode and utilizing two different molecules susceptible to electrochemical conversion as fuel. In this example, the two molecules susceptible to electrochemical conversion are the reduced form of Alizarin Red S (anode) and catechol (cathode), both which undergoes conversion involving the transfer of two electrons and two protons. Fig. 6b shows the chemical reactions taking place at the anode and the cathode, respectively, as well as the overall reaction. Fig. 6c shows a plot of the discharge over time. By utilizing polymer electrodes according to the invention at both the anode and the cathode, a reduced form of Alizarin Red S and the catechol can be simultaneously utilized in the discharge of the flow battery. Thus, electrochemical conversions involving the transfer of two electrons and two protons can take place at both electrodes of the flow battery.

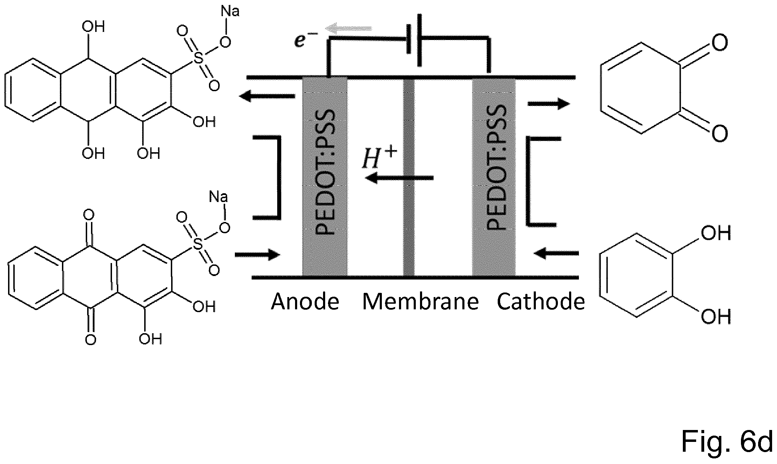

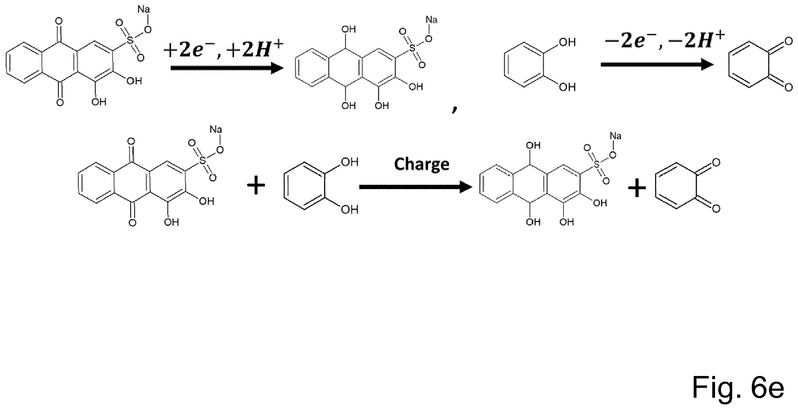

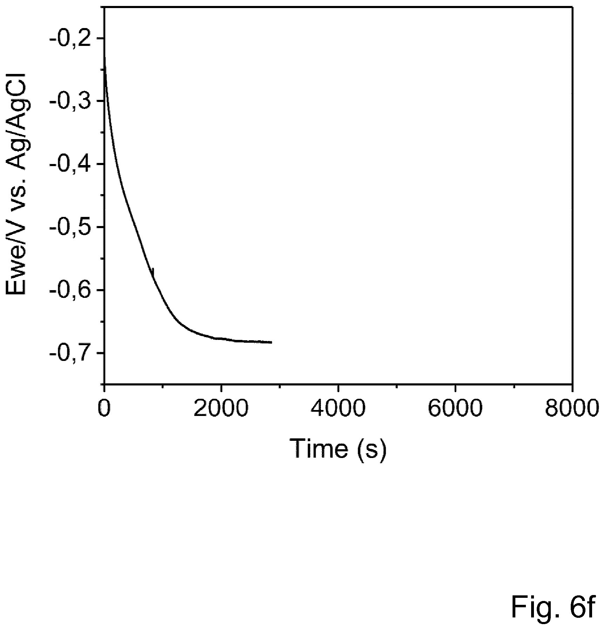

Figs 6d shows a schematic charge of a flow battery using PEDOT:PSS electrodes as both the anode and cathode and utilizing two molecules susceptible to electrochemical conversion as fuel. In this example, the two molecules susceptible to electrochemical conversion are Alizarin Red S (anode) and a reduced form of catechol (cathode), both which undergoes conversion involving the transfer of two electrons and two protons. Fig 6e shows shows the chemical reactions taking place at the anode and the cathode, respectively, as well as the overall reaction. Fig. 6f shows a plot of the charge over time. By utilizing polymer electrodes according to the invention at both the anode and the cathode, Alizarin Red S and a reduced form of catechol can be simoultaneously utilized in the charge of the flow battery. Thus, electrochemical conversions involving the transfer of two electrons and two protons can take place at both electrodes of the flow battery.

## Claims

1. An electrochemical energy device being a flow battery or a fuel cell comprising
   a polymer electrode having an electron conductive phase and a proton conductive phase; and
   a fuel comprising a molecule susceptible to electrochemical conversion,
   wherein the molecule susceptible to electrochemical conversion is a ortho- or para-aromatic diol or quinone, such as a benzene diol.

2. The electrochemical energy device according to any one of the preceding claims, wherein the electron conducting phase comprises a conducting polymer, preferably a p-type conducting polymer, more preferably poly(3,4-ethylenedioxythiophene) (PEDOT); and/or wherein the proton conducting phase comprises an anion, such as a polyanion, preferably polystyrene sulfonate (PSS).

3. The electrochemical energy device according to any one of the preceding claims, wherein the electrochemical conversion involves transfer of 2 protons and 2 electrons per molecule susceptible to electrochemical conversion.

4. The electrochemical energy device according to any one of the preceding claims, wherein the molecule susceptible to electrochemical conversion is selected from the group consisting of catechol, hydroquinone, benzoquinone or a combination thereof.

5. The electrochemical energy device according to any one of claims 1-4, the electrochemical device being a flow battery wherein both the anode and the cathode of the flow battery comprises a polymer electrode having an electron conductive phase and a proton conductive phase.

6. Use of an electrochemical energy device according to any one of claims 1-5 for electrochemical conversion of the molecule susceptible to electrochemical conversion.

7. Use according to claim 6, wherein the electrochemical conversion involves transfer of 2 protons and 2 electrons per molecule.

8. A process for electrochemical conversion in the electrochemical energy device of claim 1, wherein the process comprises the steps of

   a) bringing the fuel comprising the molecule susceptible to electrochemical conversion into contact with the polymer electrode
   b) allowing the molecule to undergo electrochemical conversion.

9. The process according to claim 8, wherein the electrochemical conversion comprises
   transfer of 2 protons per molecule between the molecule and the proton conducting phase; and
   transfer of 2 electrons per molecule between the molecule and the electron conducting phase.

10. The process according to any one of claims 8 or 9, wherein said electron conducting phase comprises a conducting polymer, preferably a p-type conducting polymer, more preferably poly(3,4-ethylenedioxythiophene) (PEDOT); and/or said proton conducting phase comprises a polyanion, preferably polystyrene sulfonate (PSS).

11. The process according to any one of claims 8-10, wherein the molecule susceptible to electrochemical conversion is selected from the group consisting of catechol, hydroquinone, benzoquinone or a combination thereof.


**Patentansprüche**

1. Elektrochemische Energievorrichtung die eine Durchflussbatterie oder eine Brennstoffzelle ist, umfassend
eine Polymerelektrode mit einer elektronenleitenden Phase und einer protonenleitenden Phase; und
einen Brennstoff umfassend ein Molekül, das für eine elektrochemische Umwandlung anfällig ist,
wobei das Molekül, das für eine elektrochemische Umwandlung anfällig ist, ein ortho- oder pararomatisches Diol oder Chinon, wie ein Benzoldiol, ist.

2. Elektrochemische Energievorrichtung nach einem der vorhergehenden Ansprüche, wobei die elektronenleitende Phase ein leitendes Polymer, vorzugsweise ein leitendes Polymer vom p-Typ, bevorzugter Poly (3,4-ethylendioxythiophen) (PEDOT) umfasst; und / oder wobei die protonenleitende Phase ein Anion, wie ein Polyanion, vorzugsweise Polystyrolsulfonat (PSS), umfasst.

3. Elektrochemische Energievorrichtung nach einem der vorhergehenden Ansprüche, wobei die elektrochemische Umwandlung die Übertragung von 2 Protonen und 2 Elektronen pro Molekül beinhaltet, das für eine elektrochemische Umwandlung anfällig ist.

4. Elektrochemische Energievorrichtung nach einem der vorhergehenden Ansprüche, wobei das für die elektrochemische Umwandlung anfällige Molekül ausgewählt ist aus der Gruppe bestehend aus Catechol, Hydrochinon, Benzochinon oder einer Kombination davon.

5. Elektrochemische Energievorrichtung nach einem der Ansprüche 1 bis 4, wobei die elektrochemische Energievorrichtung eine Durchflussbatterie ist, wobei sowohl die Anode als auch die Kathode der Durchflussbatterie eine Polymerelektrode mit einer elektronenleitenden Phase und eine protonenleitende Phase umfasst.

6. Verwendung einer Elektrochemische Energievorrichtung nach einem der Ansprüche 1 bis 5 zur elektrochemischen Umwandlung des Moleküls, das für eine elektrochemische Umwandlung anfällig ist.

7. Verwendung nach Anspruch 6, wobei die elektrochemische Umwandlung den Transfer von 2 Protonen und 2 Elektronen pro Molekül beinhaltet.

8. Verfahren zur elektrochemischen Umwandlung in der elektrochemische Energievorrichtung nach Anspruch 1, wobei das Verfahren die Schritte umfasst

a) Inkontaktbringen des Brennstoffs, der das Molekül umfasst, das für elektrochemische Umwandlung anfällig ist, mit der Polymerelektrode
b) Ermöglichen, dass das Molekül eine elektrochemische Umwandlung erfährt.

9. Verfahren nach Anspruch 8, wobei die elektrochemische Umwandlung den Transfer von 2 Protonen pro Molekül zwischen dem Molekül und der protonenleitenden Phase umfasst; und Übertragung von 2 Elektronen pro Molekül zwischen dem Molekül und der elektronenleitenden Phase umfasst.

10. Verfahren nach einem der Ansprüche 8 oder 9, wobei die elektronenleitende Phase ein leitendes Polymer, vorzugsweise ein leitendes Polymer vom p-Typ, bevorzugter Poly (3,4-ethylendioxythiophen) (PEDOT) umfasst; und / oder die protonenleitende Phase ein Polyanion, vorzugsweise Polystyrolsulfonat (PSS), umfasst.

11. Verfahren nach einem der Ansprüche 8 bis 10, wobei das Molekül, das für eine elektrochemische Umwandlung anfällig ist, ausgewählt ist aus der Gruppe bestehend aus Katechol, Hydrochinon, Benzochinon oder einer Kombination davon.

**Revendications**

1. Dispositif d'énergie électrochimique étant une batterie à flux ou une pile à combustible comprenant une électrode polymère ayant une phase conductrice d'électrons et une phase conductrice de protons ; et un combustible comprenant une molécule susceptible de conversion électrochimique, dans lequel la molécule susceptible de conversion électrochimique est un diol ortho- ou para-aromatique ou une quinone, tel qu'un benzènediol.

2. Dispositif d'énergie électrochimique selon l'une quelconque des revendications précédentes, dans lequel la phase conductrice d'électrons comprend un polymère conducteur, de préférence un polymère conducteur de type p, plus préférablement le poly (3,4-éthylènedioxythiophène) (PEDOT) ; et/ou dans lequel la phase conductrice de protons comprend un anion, tel qu'un polyanion, de préférence du polystyrène sulfonate (PSS).

3. Dispositif d'énergie électrochimique selon l'une quelconque des revendications précédentes, dans lequel la conversion électrochimique implique le transfert de 2 protons et de 2 électrons par molécule susceptible de conversion électrochimique.

4. Dispositif d'énergie électrochimique selon l'une quelconque des revendications précédentes, dans lequel la molécule susceptible de conversion électrochimique est choisie dans le groupe constitué par le catéchol, l'hydroquinone, la benzoquinone ou une combinaison de ceux-ci.

5. Dispositif d'énergie électrochimique selon l'une quelconque des revendications 1 à 4, le dispositif électrochimique étant une batterie à flux dans laquelle à la fois l'anode et la cathode de la batterie à flux comprennent une électrode polymère ayant une phase conductrice d'électrons et une phase conductrice de protons.

6. Utilisation d'un dispositif d'énergie électrochimique selon l'une quelconque des revendications 1 à 5 pour la conversion électrochimique de la molécule sensible à la conversion électrochimique.

7. Utilisation selon la revendication 6, dans laquelle la conversion électrochimique implique le transfert de 2 protons et 2 électrons par molécule.

8. Procédé de conversion électrochimique dans le dispositif d'énergie électrochimique selon la revendication 1, dans lequel le procédé comprend les étapes consistant à

a) mettre en contact le combustible comprenant la molécule susceptible de conversion électrochimique avec l'électrode polymère
b) permettre à la molécule de subir une conversion électrochimique.

9. Procédé selon la revendication 8, dans lequel la conversion électrochimique comprend le transfert de 2 protons par molécule entre la molécule et la phase conductrice de protons ; et le transfert de 2 électrons par molécule entre la molécule et la phase conductrice d'électrons.

10. Procédé selon l'une quelconque des revendications 8 ou 9, dans lequel ladite phase conductrice d'électrons comprend un polymère conducteur, de préférence un polymère conducteur de type p, plus préférablement le poly (3,4-éthylènedioxythiophène) (PEDOT) ; et/ou ladite phase conductrice de protons comprend un polyanion, de préférence du polystyrène sulfonate (PSS).

11. Procédé selon l'une quelconque des revendications 8 à 10, dans lequel la molécule susceptible de conversion électrochimique est choisie dans le groupe constitué par le catéchol, l'hydroquinone, la benzoquinone ou une combinaison de ceux-ci.

Fig. 1a

Fig. 1b

Fig. 1c

Fig. 2a

Fig. 2b

Fig. 2c

Fig. 2d

Fig. 3a

slope=-0.05453

Fig. 3b

Fig. 3c

Fig. 4a

Fig. 4b

Fig. 4c

Fig. 4d

Fig. 5a

$$2\mathrm{H}Q - 4e^- - 4H^+ \to 2\mathrm{BQ}$$
$$(E^0 \approx 0.42V)$$

$$O_2 + 4e^- + 4H^+ \to 2H_2O$$
$$(E^0 = 1.23V)$$

Fig. 5b

Fig. 5c

Fig. 5d

Fig. 6a

Fig. 6b

Fig. 6c

Fig. 6d

Fig. 6e

Fig. 6f

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016205407 A1